# EUROPEAN PATENT APPLICATION

(11) **EP 3 663 236 A1**
(43) Date of publication of application: **10.06.2020**
(21) Application number: 18841782.8
(22) Date of filing: 30.03.2018
(51) Int. Cl.: B65G 1/137, B64C 27/08, B64C 39/02, B64D 47/08, G06Q 10/08

(54) **CARGO MONITORING SYSTEM**

(30) Priority: 31.07.2017 JP 2017147926
(71) Applicant: UPR Corporation, Tokyo 100-0011 (JP)
(72) Inventor: SHIMIZU,Masashi, Tokyo 100-0011 (JP); NAKAMURA,Yasuhisa, Tokyo 100-0011 (JP); SAKATA,Kenji, Tokyo 100-0011 (JP); SAKATA,Yoshiya, Tokyo 100-0011 (JP)
(74) Representative: Samson & Partner Patentanwälte mbB
(86) International application number: PCT/JP2018/013688
(87) International publication number: WO 2019/026346

(57) **Abstract**

A cargo monitoring system according to this invention monitors the state of a cargo stored in a warehouse, including at least one target that is installed at a predetermined position in the warehouse and including a spherical lighting unit configured to be turned on at a predetermined timing, and an image information obtaining apparatus including an image obtaining unit that obtains image information of the target and image information of the cargo. The image information obtaining apparatus obtains, by the image obtaining unit, image information of the lighting unit when the lighting unit is turned on, moves toward the target in the warehouse based on the image information of the lighting unit, and obtains the image information of the cargo. This invention can provide a system capable of easily monitoring the states of cargoes in a multi-tier rack warehouse or a flat storage warehouse.

## Description

### Technical Field

The present invention relates to a system that monitors the state of a cargo in a multi-tier rack warehouse or a flat storage warehouse.

### Background Art

In logistics, a cargo is put on a pallet, carried, and stored on the pallet in a warehouse or the like. A system has been proposed in which images of cargoes in a warehouse are captured by a plurality of cameras installed in the warehouse, the obtained images are collected in a server, and the states of the cargoes are managed by remote control (see, for example, "patent literature 1").

In patent literature 1, a plurality of cameras are installed for each stock item in a warehouse. The state of a cargo is remote-controlled for each stock item in the warehouse by transmitting image information obtained by the cameras from a terminal in the warehouse to a server via a network.

### Related Art Literature

### Patent Literature

Patent Literature 1: Japanese Patent Laid-Open No. 2013-224196

### Disclosure of Invention

### Problem to be Solved by the Invention

In the management system disclosed in patent literature 1, the positions of the cameras for obtaining image information of a cargo are fixed. It is difficult to always monitor the states of all cargoes in a multi-tier rack warehouse or a flat storage warehouse in or from which cargoes are frequently loaded and unloaded because the installation status of the cargoes are frequently changed. Further, it is not practical to change the installation locations and positions of the cameras in the warehouse as needed in order to cope with such a situation.

The present invention has been made to solve the above-described problems, and has as its object to provide a system capable of easily monitoring the state of a cargo in a multi-tier rack warehouse or a flat storage warehouse.

### Means of Solution to the Problem

To achieve the above object, according to the present invention, there is provided a cargo monitoring system that monitors a state of a cargo stored in a warehouse, including at least one target that is installed at a predetermined position in the warehouse and includes a spherical lighting unit configured to be turned on at a predetermined timing, and an image information obtaining apparatus including an image obtaining unit that obtains image information of the target and image information of the cargo, wherein the image information obtaining apparatus obtains, by the image obtaining unit, image information of the lighting unit when the lighting unit is turned on, moves toward the target in the warehouse based on the image information of the lighting unit, and obtains the image information of the cargo by the image obtaining unit.

### Effect of the Invention

The present invention provides a system capable of easily monitoring the state of a cargo in a multi-tier rack warehouse or a flat storage warehouse. Brief Description of Drawings
Fig. 1 shows an example of the structure of a cargo monitoring system according to the first embodiment of the present invention;
Fig. 2A shows an example of the structure of a target according to the first embodiment of the present invention;
Fig. 2B shows an example of the structure of a target according to the first embodiment of the present invention;
Fig. 2C shows an example of the structure of a target according to the first embodiment of the present invention;
Fig. 3 is a functional block diagram showing an example of a target and drone constituting the cargo monitoring system according to the first embodiment of the present invention;
Fig. 4 is a view for explaining a cargo state monitoring operation by the drone according to the first embodiment of the present invention;
Fig. 5A is a view for explaining the cargo state monitoring operation by the drone according to the first embodiment of the present invention;
Fig. 5B is a view for explaining the cargo state monitoring operation by the drone according to the first embodiment of the present invention;
Fig. 6 is a view for explaining a target capturing operation by the drone according to the first embodiment of the present invention;
Fig. 7A is a view for explaining the ON operation of the lighting unit of the target according to the first embodiment of the present invention;
Fig. 7B is a view for explaining the ON operation of the lighting unit of the target according to the first embodiment of the present invention;
Fig. 8 is a sequence chart for explaining the operations of the target and drone according to the first embodiment of the present invention;
Fig. 9 shows an example of the arrangement of a cargo monitoring system according to the second embodiment of the present invention;
Fig. 10 shows an example of the arrangement of a cargo monitoring system according to another embodiment of the present invention; and
Fig. 11 shows an example of the arrangement of a cargo monitoring system according to still another embodiment of the present invention.

### Best Mode for Carrying Out the Invention

### <First Embodiment>

The first embodiment of the present invention will be described below with reference to the accompanying drawings.

### <Structure of Cargo Monitoring System>

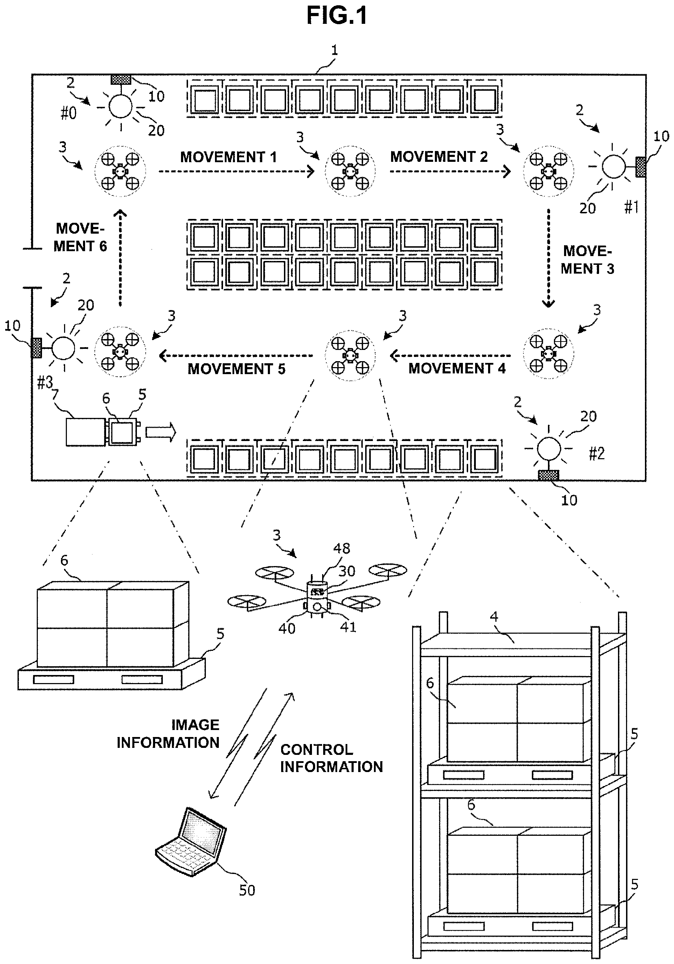

Fig. 1 shows an example of the structure of a cargo monitoring system according to the first embodiment of the present invention. In the cargo monitoring system in Fig. 1, pallets 5 bearing cargoes 6 are loaded to a multi-tier rack warehouse 1 by a forklift 7 and stacked in a plurality of stages in multi-tier racks 4. Drones 3 flying inside the warehouse 1 monitor the states of the cargoes 6. Each drone 3 flies inside the warehouse 1 while being guided by at least one target 2 installed in the warehouse. In the first embodiment, the drone 3 is used as an image information obtaining device that obtains image information of a cargo in the warehouse.

Note that the cargo monitoring system is described with reference to Fig. 1 by exemplifying a multi-tier rack warehouse in which the pallets 5 bearing the cargoes 6 are stacked in a plurality of stages in the multi-tier racks 4. However, this system is also applicable to a flat storage warehouse in which the pallets 5 bearing the cargoes 6 are placed flat.

### <Target>

At least one target 2 is installed in the warehouse 1 to guide the drone in a predetermined direction in the warehouse so that the drone flies along a predetermined route. The target 2 includes a spherical lighting unit 20. The lighting unit 20 is turned on at a predetermined timing to guide the drone in a predetermined direction. The lighting unit 20 has a spherical shape and can determine, from any direction, how far or near a distance to the target is.

A wireless tag 10 is attached to the target 2 as needed, and can transmit a beacon signal including a unique identifier and receive a command from a wireless tag reader. The wireless tag is used to turn on or off the lighting unit in accordance with instruction information from the wireless tag reader installed in the drone.

In the example of Fig. 1, four targets 2 (#0 to #3) are installed in the warehouse 1. The drone starts flying from the target #0, that is, a starting point. The drone is guided in order of the target #1, the target #2, and the target #3 and flies inside the warehouse. The number of targets 2 and their arrangement positions are determined in accordance with the arrangement layout of racks in the warehouse 1 and the route of movement of the drone. To always obtain images of the targets 2 by a camera installed in the drone, visibility from the drone to the target needs to be secured. To secure the visibility from the drone to the target, for example, the target is installed at a position higher than the multi-tier rack 4.

### <Drone>

The drone 3 includes a sensor unit 48 configured to avoid collision with obstacles in the warehouse and detect the height of the drone, and a camera unit 41 serving as an image obtaining unit configured to obtain image information of the targets 2 and cargoes. The drone 3 flies in the warehouse and obtains image information by the camera unit 41 while avoiding collision with obstacles in the warehouse 1 such as the walls and ceiling of the warehouse and the multi-tier racks 4.

The drone 3 includes a wireless tag reader 30 as needed and can exchange commands and responses with the target 2. The wireless tag reader 30 receives a beacon signal from the wireless tag 10 and is used when turning on or off the lighting unit of the target by transmitting a response signal to the wireless tag.

The drone 3 autonomously flies toward the target 2 by obtaining image information of the lighting unit 20 of the target 2 using the camera unit 41, and determining a distance to the target 2 using size information of the lighting unit 20 included in the obtained image information. In the example of Fig. 1, when the drone moving from the starting point toward the target #1 determines arrival in the vicinity of the target #1 based on image information of the target #1, it changes the direction toward the next target #2 and moves toward the target #2 while obtaining image information of the target #2. This also applies to movement from the target #2 to the target #3. The drone 3 that has moved in order of the target #1, the target #2, and the target #3 returns again to the starting point #0.

While the drone 3 is guided by the targets #1 to #3 and moves in the warehouse, it can obtain images of the cargoes 6 on the pallets 5 set in the multi-tier racks 4, and monitor the states of the cargoes using the image information. The states of the cargoes may be monitored by transmitting the obtained image information to an external terminal 50.

### <Structure of Target>

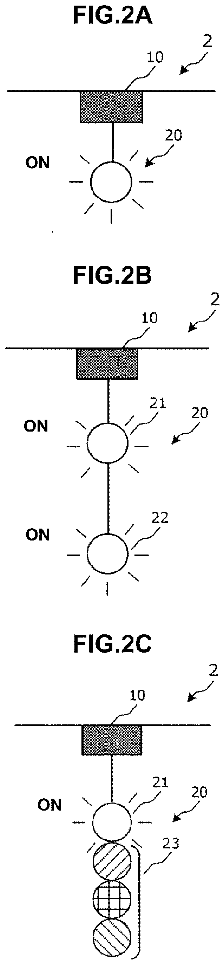

Figs. 2A to 2C show examples of the structure of the target according to the first embodiment of the present invention. Fig. 2A shows an example of the structure of the target including one spherical lighting unit 20. A distance to the target is determined using size information of the target when the lighting unit 20 is turned on.

Fig. 2B shows an example of the structure of the target in which two spherical lighting units 21 and 22 are connected at a predetermined interval. As for the target in Fig. 2B, a distance to the target is determined using the distance information between the two lighting units when the two spherical lighting units 21 and 22 are turned on. Note that the number of lighting units is not limited to two.

Fig. 2C shows an example of the structure of the target in which the lighting unit in Fig. 2A further includes a color indicator formed from connected balls in a plurality of colors. Since the balls having a plurality of colors are used in the color indicator to represent a unique identification code, a specific target can be identified from a plurality of targets by obtaining an image of the color indicator. By using such a target, for example, a desired target can be specified from a plurality of targets whose lighting units are turned on. A color indicator may be placed between the two lighting units in Fig. 2B.

### <Structure of Target and Drone>

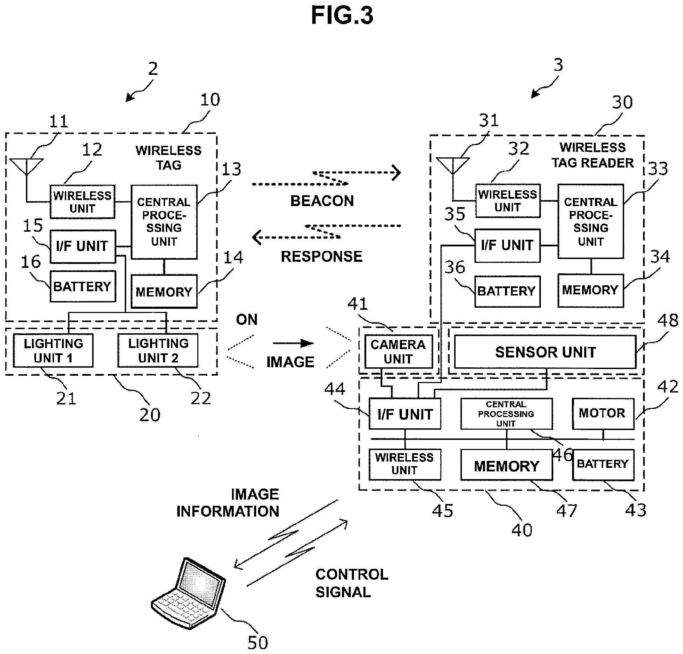

Fig. 3 is a functional block diagram showing an example of the target and drone constituting the cargo monitoring system according to the first embodiment of the present invention.

The target 2 includes the lighting unit 20 and when needed, the lighting unit 20 includes the plurality of lighting units 21 and 22, as described with reference to Fig. 2. Also, when needed, the target 2 includes the wireless tag 10, and can transmit a beacon signal including a unique identifier to the wireless tag reader and receive a response signal from the wireless tag reader.

The wireless tag 10 is an active tag that operates by an internal battery 16. The wireless tag 10 includes an antenna 11 and wireless unit 12 configured to transmit a beacon signal including unique identification information and receive a response signal from the wireless tag reader 30, an I/F unit 15 configured to communicate with the lighting unit 20, a central processing unit 13 configured to control the respective units, and a memory 14.

The central processing unit 13 of the wireless tag 10 can perform an intermittent operation to activate the wireless tag at a predetermined interval in order to transmit a beacon signal, and when it receives a response signal from the wireless tag reader, control the respective units in accordance with a command included in the response signal. For example, when a response signal received from the wireless tag reader includes a lighting unit ON instruction, the central processing unit 13 turns on the lighting unit in accordance with the instruction information.

The drone 3 includes the sensor unit 48 configured to avoid collision with obstacles in the warehouse and detect the height of the drone relative to the ground, and the camera unit 41 serving as an image obtaining unit configured to obtain image information of the target 2 and cargoes. As the sensor unit 48, an ultrasonic sensor or a laser sensor that measures a distance to an obstacle using an ultrasonic wave or a laser can be used. However, the sensor unit 48 is not limited to them and, for example, an image sensor that measures a distance to an obstacle using a plurality of cameras may be used. The sensor unit 48 is installed so that it can detect distances to at least obstacles above and below the drone 3, the obstacles on the right and left sides of the drone 3, and the obstacles in front of and behind the drone 3.

The wireless tag reader 30 is, when needed, mounted on the drone 3 and can receive a beacon signal from the wireless tag 10 and transmit a corresponding response signal. The wireless tag reader 30 includes an antenna 31 and wireless unit 32 configured to transmit and receive signals to and from the wireless tag, an I/F unit 35 configured to transmit and receive signals to and from the camera unit 41, a central processing unit 33 configured to control the respective units, and a memory 34. The wireless tag reader 30 may operate by an internal battery 36 or by an internal battery 43 of a drone main body 40.

The drone main body 40 includes a propeller (not shown) for flight, a motor 42 configured to rotate the propeller, the battery 43 configured to supply power to the respective units, an I/F unit 44 configured to receive image information from the camera unit 41, a wireless unit 45 configured to, for example, transmit image information to the external terminal 50, a central processing unit 46 configured to perform processes such as control of the motor 42 and transmission/reception of image information, and a memory 47 configured to save image information and the like.

The camera unit 41 obtains image information of the lighting unit 20 of the target 2 and image information of the cargo 6 on the pallet 5. The central processing unit 46 performs image processing of the image information obtained by the camera unit 41, determines a distance to the target 2 using size information of the lighting unit, and controls the motor 42 so that the drone 3 arrives at a target based on the information. The obtained image information can be saved in the memory 47 of the drone main body 40, transmitted to the external terminal 50, and monitored on the external terminal 50.

### <Cargo State Monitoring Operation>

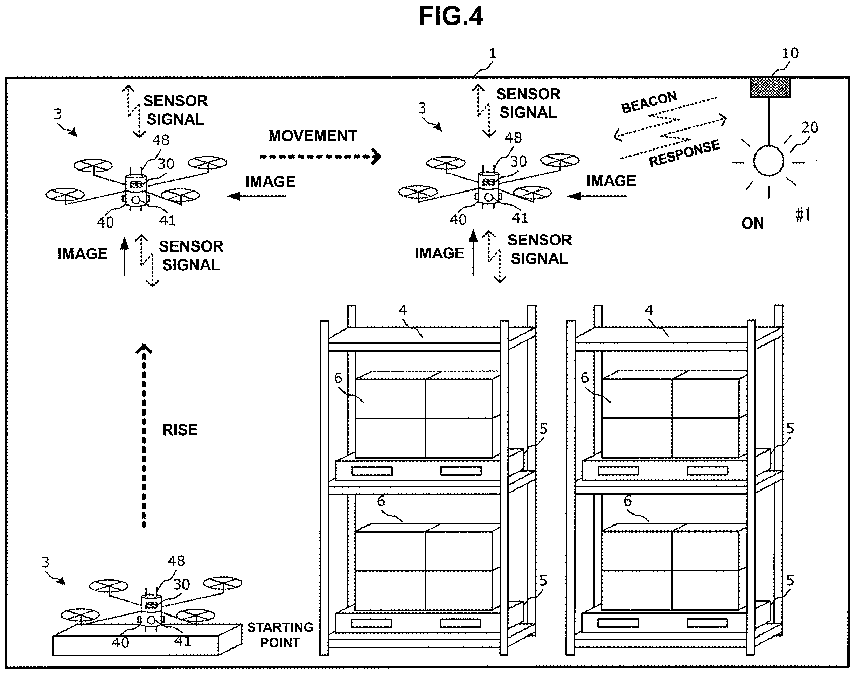

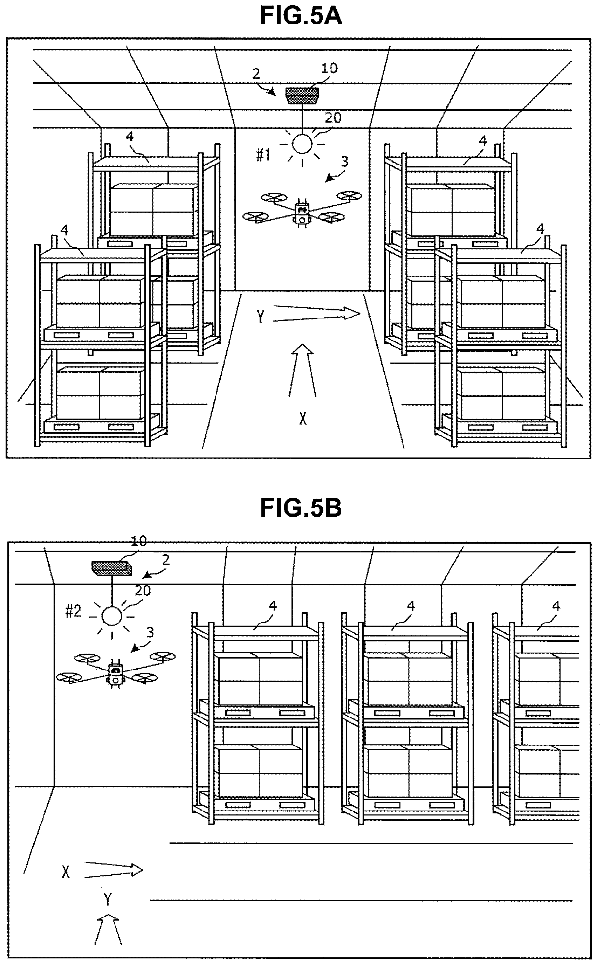

A cargo state monitoring operation by the drone according to the first embodiment of the present invention will be explained with reference to Figs. 4 and 5.

The cargo state monitoring operation by the drone will be explained with reference to Fig. 4 by exemplifying the multi-tier rack warehouse 1 containing a plurality of multi-tier racks 4 on which the pallets 5 bearing the cargoes 6 are stacked in a plurality of stages. This monitoring operation is also applicable to a flat storage warehouse.

The drone 3 goes up from the starting point to a predetermined height, then flies toward the target #1 while avoiding obstacles in the warehouse 1, and obtains image information for monitoring the states of cargoes. In Fig. 4, the drone 3 goes up from a state in which it stands still at the starting point, and reaches close to the ceiling of the warehouse 1. When the drone 3 reaches a predetermined height, it flies toward the target #1 while keeping the distance from the ceiling constant using the sensor unit 48. The drone 3 obtains image information of the target #1 in order to fly toward the target #1, and determines how far or near a distance to the target #1 is based on the obtained image information.

When the drone 3 flies indoors, the risk of collision with obstacles increases in comparison with a case in which it flies outdoors. Particularly when the drone 3 flies in the warehouse 1, if it collides with an obstacle such as the ceiling, the wall, or a cargo in the warehouse 1, the drone 3 may fall down and may even damage the cargo 6 by a part of the drone 3 such as the propeller. To avoid this, the drone 3 uses the sensor unit 48 to measure distances to obstacles in the warehouse 1 and flies in the warehouse while autonomously avoiding collision with the obstacles.

As shown in the example of Figs. 5A and 5B, the drone 3 flies toward the target #1 in the warehouse 1 (Fig. 5A), and when it arrives at the target #1, changes the direction toward the target #2 and flies toward the target #2 (Fig. 5B).

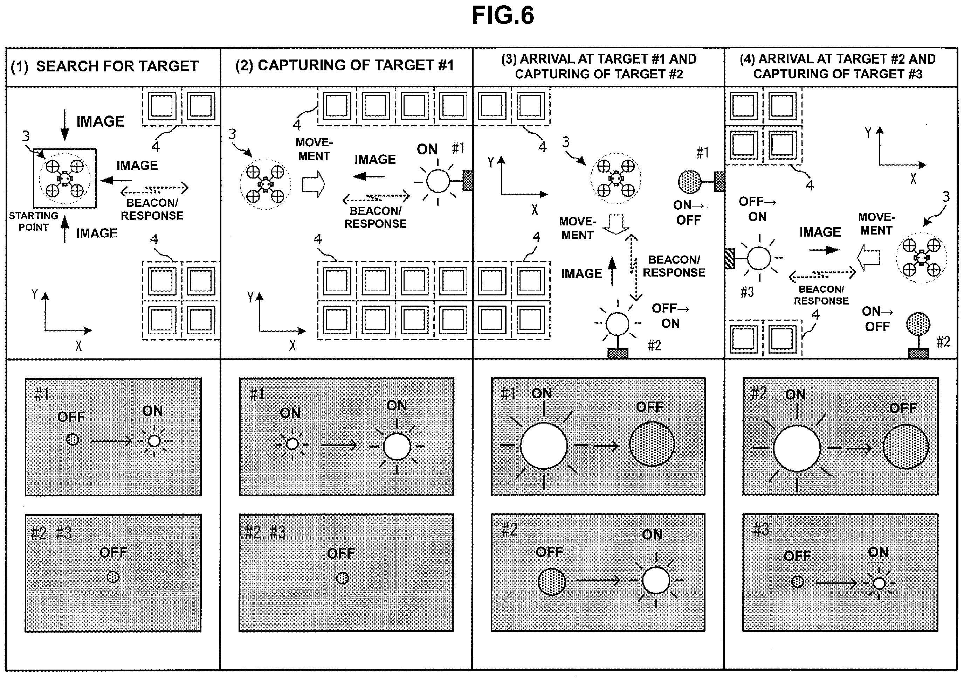

Fig. 6 is a view for explaining a target capturing operation by the drone according to the first embodiment of the present invention. An operation of the drone until it captures the target #3 after moving toward the targets #1 and #2 from a state in which the drone stands still at the starting point will be explained with reference to Fig. 6. The drone is programmed to fly at a predetermined time (for example, during nighttime when no cargo is being loaded or unloaded from the warehouse). The lighting unit of the target is turned on/off in accordance with an instruction from the wireless tag reader of the drone.

In stage (1), no target is captured, so the drone 3 goes up to a height at which it can detect a target, and then searches for a target. In the example of Fig. 6, the first target is #1. When the drone 3 receives a beacon signal transmitted from the wireless tag of the target #1, it designates the ON operation of the lighting unit of the target #1 using a response signal to the beacon signal, obtains an image of the surroundings by the camera unit, and searches for the lighting unit of the target #1.

In (2), when the drone 3 captures the ON target #1, it starts moving toward the target #1. As the drone 3 comes closer to the target #1, the target #1 appears larger. From this, it can be determined that the drone 3 is moving toward the target #1.

In (3), when the size of the target #1 exceeds a predetermined size, the drone 3 determines that it has arrived in the vicinity of the target #1. The drone 3 then stops moving in the direction of the target #1, and designates the OFF operation of the lighting unit of the target #1 using a response signal to the beacon signal from the wireless tag of the target #1. To start moving toward the target #2, the drone 3 designates the ON operation of the lighting unit of the target #2 using a response signal to a beacon signal from the wireless tag of the target #2. The drone 3 obtains image information of the surroundings by the camera unit, and can capture the ON target #2.

In (4), when the size of the target #2 exceeds a predetermined size, the drone 3 determines that it has arrived in the vicinity of the target #2. The drone 3 then stops moving in the direction of the target #2 and designates the OFF operation of the lighting unit of the target #2. To start moving toward the target #3, the drone 3 designates the ON operation of the lighting unit of the target #3.

### <ON Operation of Lighting Unit of Target>

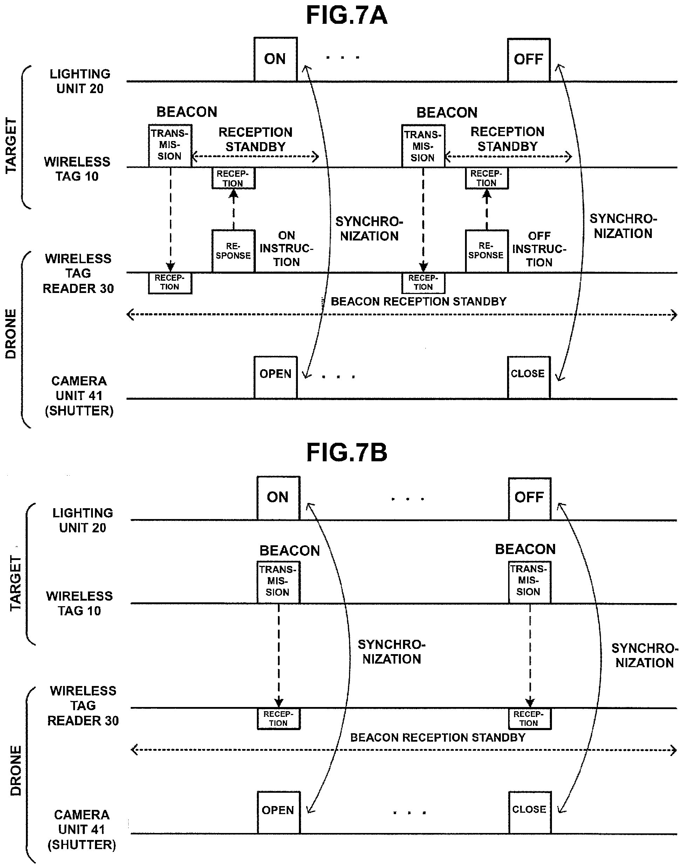

Figs. 7A and 7B are views for explaining the ON operation of the lighting unit of the target according to the first embodiment of the present invention. Fig. 7A shows a case in which the ON/OFF operation of the lighting unit of the target is performed in accordance with instruction information from the wireless tag reader of the drone. Fig. 7B shows a case in which the lighting unit is turned on in synchronization with the transmission timing of a beacon signal from the wireless tag and the drone flies in synchronization with the ON timing.

In Fig. 7B, the wireless tag 10 of the target 2 performs an intermittent operation to activate the wireless tag at a predetermined interval and transmit a beacon signal in order to reduce power consumption of the internal battery. The wireless tag 10 of the target 2 then changes to a reception standby state for only a predetermined time after transmitting the beacon in order to reduce power consumption in the reception standby state. In the reception standby state, a response signal can be received from the wireless tag reader.

The wireless tag reader 30 of the drone 3 can set an ON instruction signal in a response signal based on an instruction from the central processing unit. The camera unit 41 opens the shutter to obtain an image of the lighting unit of the target.

When the ON signal is included in the response signal from the wireless tag reader 30, the wireless tag 10 instructs the lighting unit 20 to turn it on, and controls the camera unit 41 to open the shutter in synchronization with the ON timing of the lighting unit.

In this manner, the lighting unit is turned on intermittently, and the camera unit 41 is operated in synchronization with the ON timing of the lighting unit. This can further reduce power consumption accompanying the ON operation of the lighting unit in the target.

In the above description, the drone is programmed to fly at a predetermined time, and the lighting unit of the target is turned on/off in accordance with an instruction from the drone. It is also possible to turn on the lighting unit of the target at a predetermined timing, fly the drone in synchronization with the ON timing, and obtain image information of cargoes.

For example, as shown in Fig. 7B, the lighting unit is turned on in synchronization with the transmission timing of a beacon signal from the wireless tag, the drone flies in synchronization with the ON timing, and the shutter of the camera unit 41 is operated to obtain image information of cargoes.

A color indicator as shown in Fig. 2C may be used to identify a specific target from a plurality of targets and turn on the lighting unit of the target.

### <Operation Sequence of Target and Drone>

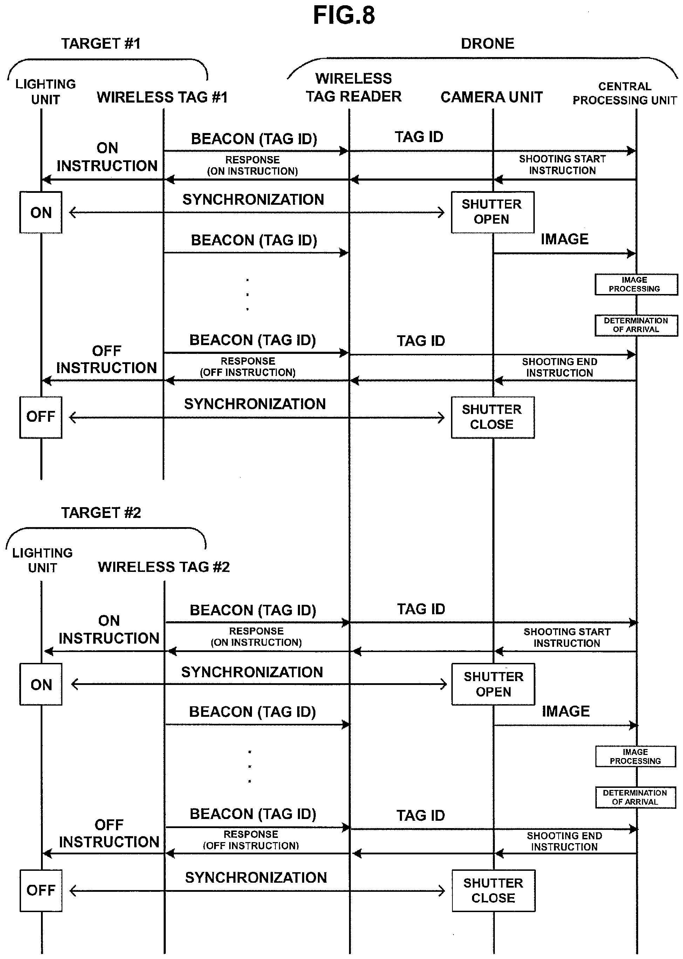

Fig. 8 is a sequence chart for explaining the operations of the target and drone according to the first embodiment of the present invention. A case in which the drone is programmed to fly at a predetermined time and the lighting unit of the target is turned on/off in accordance with an instruction from the drone will be exemplified with reference to Fig. 8.

When the central processing unit of the drone receives a beacon signal from the wireless tag #1 of the target #1 that is, the first target, the central processing unit of the drone instructs the camera unit to start shooting images, and instructs the wireless tag reader to transmit a lighting unit ON instruction to the wireless tag of the target #1 using a response signal to the beacon signal. The shutter of the camera unit operates in synchronization with the ON operation of the lighting unit of the target #1, and an image of the lighting unit can be obtained.

After obtaining the image of the lighting unit, the central processing unit specifies the size of the lighting unit by image processing. The central processing unit controls the motor of the drone main body and flies the drone toward the target #1 so that the specified lighting unit appears larger, that is, the distance to the target is becoming shorter.

When the size of the lighting unit of the target #1 exceeds a predetermined size, the central processing unit determines that the drone has arrived in the vicinity of the target #1. The central processing unit instructs the camera unit to end shooting images of the target #1, and instructs the wireless tag reader to transmit a lighting unit OFF instruction to the wireless tag of the target #1 using a response signal to the beacon signal.

When the central processing unit of the drone receives a beacon signal from the wireless tag #2 of the target #2 that is the next target, the central processing unit of the drone obtains an image of the target #2 in correspondence with the beacon signal by the ON operation of the lighting unit of the target #2 and the camera unit that operates in synchronization with the ON timing. The central processing unit flies the drone toward the target #2. When the drone arrives in the vicinity of the target #2, it ends shooting images of the target #2, and starts the ON operation and capturing of the target #3 that is, the next target.

As described above, according to the first embodiment of the present invention, image information of cargoes can be obtained while the drone autonomously flies according to the guide of the targets installed in the warehouse. The states of cargoes in a multi-tier rack warehouse or a flat storage warehouse can be easily monitored. Even when the layout of cargoes in the warehouse is changed, the cargoes in the warehouse can be easily monitored.

### <Second Embodiment>

In the first embodiment, the central processing unit 46 of the drone main body 40 performs image processing for identifying the size of the lighting unit of the target. However, another network-connected apparatus may perform the image processing.

For example, a target 2 has a wireless communication functionality of communicating with a wireless unit 45 of a drone, such as wireless LAN. Image information of a lighting unit 20 that is obtained by a camera unit 41 is transmitted to the target 2, and further transmitted to another terminal 80 via a network. The terminal 80 performs image processing.

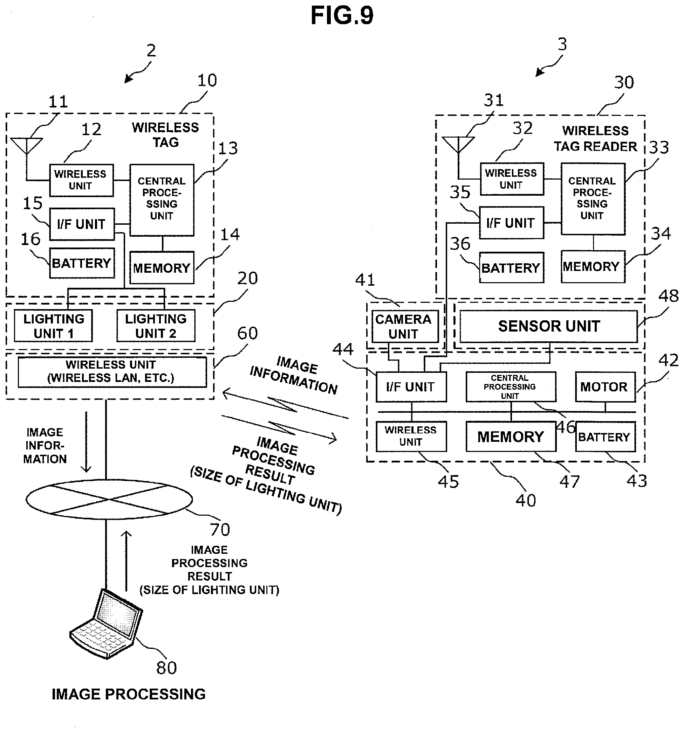

Fig. 9 shows an examples of the arrangement of a cargo monitoring system in this case. The target 2 includes a wireless unit 60 configured to obtain image information of the lighting unit 20 from a wireless unit 45 of a drone main body 40. The wireless unit 60 transmits the received image information to the terminal 80 via a network 70, and the terminal 80 performs image processing for specifying the size of the lighting unit.

The terminal 80 performs image processing on the received image information of the lighting unit, and sends back to the target 2 the specified size information of the lighting unit. The target 2 transmits the information to the drone main body 40. The drone main body 40 determines a distance to the target 2 based on the obtained size information of the lighting unit, and the drone can fly toward the target using the information.

In a state in which the camera of the drone captures the lighting unit of the target, no obstacle exists between the drone and the target, and visibility is secured. Since visibility is secured, a wireless LAN of a frequency band (5 GHz band or 60 GHz band) not interfering with another frequency band (2.4 GHz band) used by a wireless LAN in the warehouse can be used for communication between the target and the drone. The use of such a frequency band can reliably transmit/receive image information and an image information processing result while avoiding the interference with a wireless LAN of another frequency band.

### <Other Embodiments>

In the first and second embodiments, a drone that flies in a warehouse is used as an image information obtaining apparatus that obtains image information of cargoes in the warehouse. Alternatively, a camera and a wireless tag reader may be mounted on an apparatus that autonomously travels on the floor in a warehouse or a forklift that carries cargoes in a warehouse, and the resultant apparatus or forklift may be used as the image information obtaining apparatus.

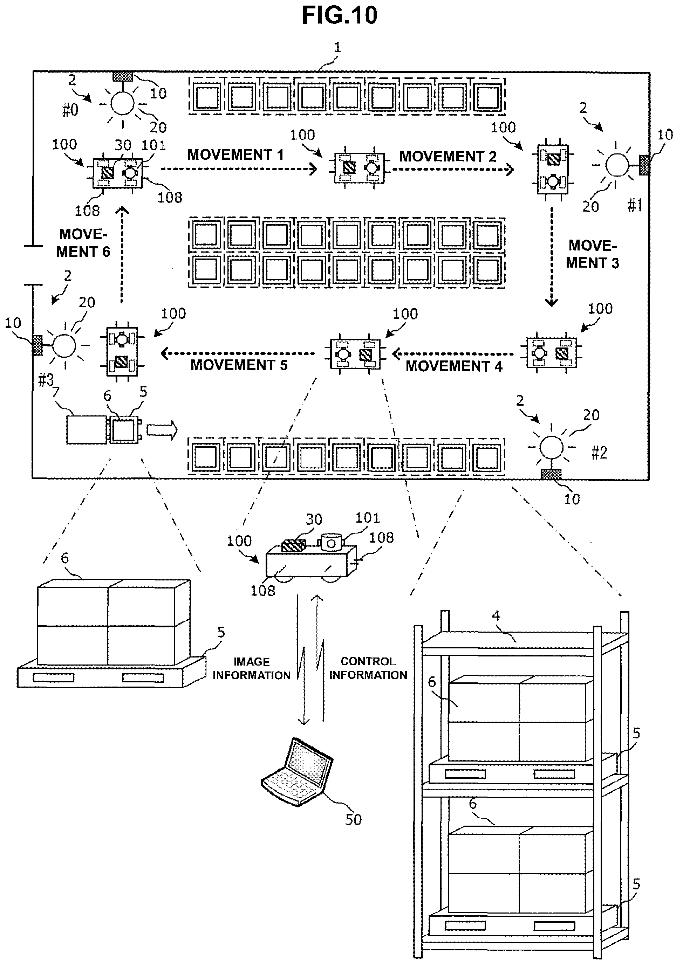

Fig. 10 shows a case in which a camera unit 101, a sensor unit 108, and a wireless tag reader 30 are mounted on an apparatus that autonomously travels on the floor in a warehouse, and the resultant apparatus is used as an image information obtaining apparatus 100. The image information obtaining apparatus 100 has a traveling functionality for autonomously traveling in a warehouse 1. Similar to the drone main body in Fig. 3, the image information obtaining apparatus 100 includes an I/F unit configured to receive image information from the camera unit 101, a wireless unit configured to, for example, transmit image information to an external terminal 50, a central processing unit configured to perform processes such as control of the traveling functionality and transmission/reception of image information, and a memory configured to save image information and the like. In Fig. 10, the image information obtaining apparatus 100 can autonomously travel in the warehouse 1 based on image information of a target 2 that is obtained by the mounted camera unit 101, and can obtain images of cargoes in the warehouse 1 while avoiding obstacles in the warehouse 1 using the sensor unit 108.

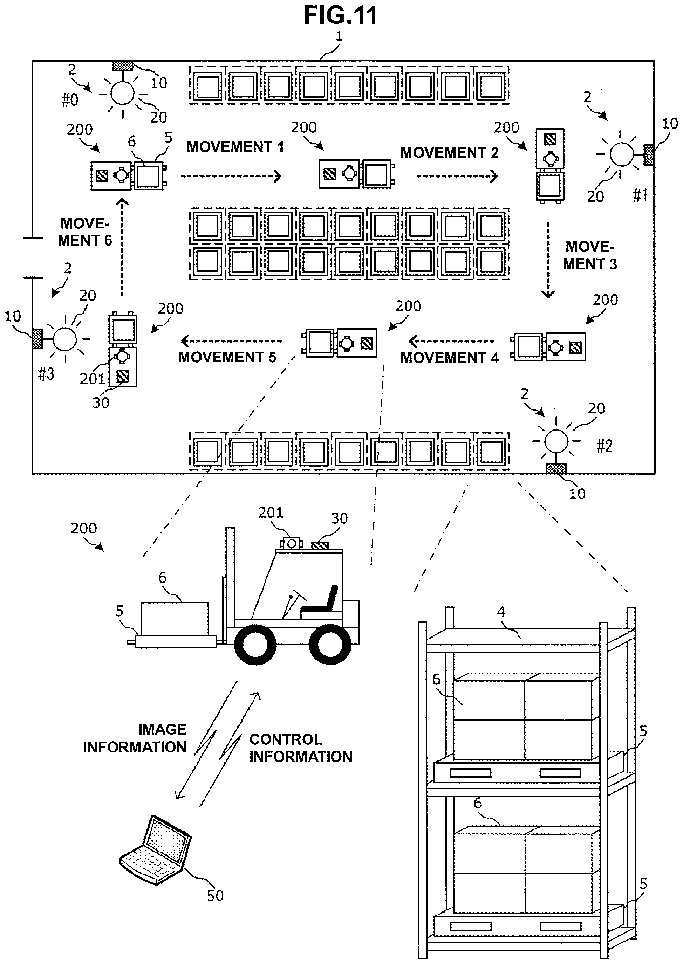

Fig. 11 shows a case in which a camera unit 201 and the wireless tag reader 30 are mounted on a forklift that carries cargoes in a warehouse, and the resultant forklift is used as an image information obtaining apparatus 200. Similar to the drone main body in Fig. 3, the image information obtaining apparatus 200 includes an I/F unit configured to receive image information from the camera unit 201, a wireless unit configured to, for example, transmit image information to the external terminal 50, a central processing unit configured to perform processes such as control of the traveling functionality and transmission/reception of image information, and a memory configured to save image information and the like. In Fig. 11, the image information obtaining apparatus 200 can travel in the warehouse 1 based on image information of the target 2 that is obtained by the mounted camera unit 201, and can obtain images of cargoes in the warehouse 1.

When the forklift is used as the image information obtaining apparatus, it may travel in the warehouse 1 based on image information of the target 2 that is obtained by the mounted camera unit 201, or may obtain images of the target 2 and cargoes in the warehouse 1 while traveling at random in the warehouse 1. In this case, the obtained image information is saved, and after the end of cargo transportation work in the warehouse 1, image processing is performed on the obtained image information. The positional relationship between the target 2 and cargoes can be estimated, and the state of each cargo can be monitored.

In Figs. 10 and 11, the central processing unit of the autonomously traveling apparatus or forklift can also perform image processing for specifying the size of the lighting unit of the target. However, another network-connected apparatus may perform image processing, as in Fig. 9.

### Explanation of the Reference Numerals and Signs

1...warehouse, 2...target, 3...drone, 4...multi-tier rack, 5...pallet, 6...cargo, 7...forklift, 10...wireless tag, 11...antenna, 12...wireless unit, 13...central processing unit, 14...memory, 15...I/F unit, 16...battery, 20, 21, 22...lighting unit, 23...color indicator, 30...wireless tag reader, 31...antenna, 32...wireless unit, 33...central processing unit, 34...memory, 35...I/F unit, 36...battery, 40...drone main body, 41...camera unit, 42...motor, 43...battery, 44...I/F unit, 45...wireless unit, 46...central processing unit, 47...memory, 48...sensor unit, 50...external terminal

## Claims

1. A cargo monitoring system that monitors a state of a cargo stored in a warehouse, comprising:
at least one target that is installed at a predetermined position in the warehouse and includes a spherical lighting unit configured to be turned on at a predetermined timing; and
an image information obtaining apparatus including an image obtaining unit that obtains image information of the target and image information of the cargo,
wherein the image information obtaining apparatus obtains, by the image obtaining unit, image information of the lighting unit when the lighting unit is turned on, moves toward the target in the warehouse based on the image information of the lighting unit, and obtains the image information of the cargo by the image obtaining unit.

2. The cargo monitoring system according to claim 1, wherein the at least one target includes one lighting unit, and
the image information obtaining apparatus moves toward the target in the warehouse based on size information of the target that is specified using size information of the lighting unit in the image information of the lighting unit.

3. The cargo monitoring system according to claim 1, wherein the at least one target includes at least two lighting units, and
the image information obtaining apparatus moves toward the target in the warehouse based on information of a distance between the at least two lighting units in the image information of the lighting unit.

4. The cargo monitoring system according to claim 2 or 3, wherein the at least one target further includes a color indicator that is connected to the lighting unit, represents a unique identification code, and is formed from connected balls in a plurality of colors.

5. The cargo monitoring system according to any one of claims 1 to 4, wherein the lighting unit of the at least one target is configured to be turned on at a predetermined timing, and
the image obtaining unit of the image information obtaining apparatus is configured to obtain the image information of the lighting unit in synchronization with an ON timing of the lighting unit.

6. The cargo monitoring system according to any one of claims 1 to 4, wherein the at least one target includes a wireless tag that transmits a beacon signal,
the image information obtaining apparatus includes a wireless tag reader that transmits a response signal corresponding to the beacon signal,
the at least one target is configured to turn on the lighting unit in accordance with instruction information included in the response signal, and
the image obtaining unit of the image information obtaining apparatus is configured to obtain the image information of the lighting unit in synchronization with an ON timing of the lighting unit.
